# EUROPEAN PATENT APPLICATION

(11) **EP 1 739 131 A1**
(43) Date of publication of application: **03.01.2007**
(21) Application number: 06253245.2
(22) Date of filing: 22.06.2006
(51) Int. Cl.: C08L 83/04, C08G 77/08

(54) **Silicone rubber composition for the tire production and method of producing the same**

(30) Priority: 27.06.2005 JP 2005186947
(71) Applicant: Bridgestone Corporation, Tokyo 104-8340 (JP); Shin-Etsu Chemical Co., Ltd., Chiyoda-ku, Tokyo 100-0004 (JP)
(72) Inventor: Yano, Masashi, Bridgestone Co. Technical Center, Kodaira-shi, Tokyo 187-8531 (JP); Mogi, Hiroshi, Shin-Etsu Chemical Co., Ltd., Annaka-shi, Gunma 379-0224 (JP)
(74) Representative: Whalley, Kevin

(57) **Abstract**

A silicone rubber composition for the tire production comprises (A) 100 parts by weight of a specified alkenyl group-containing straight-chain diorganopolysiloxane, (B) 1-20 parts by weight of a specified hydrogen atom-containing organohydrogenpolysiloxane, (C) 30-60 parts by weight of an inorganic filler, (D) 0.5-20 parts by weight of a specified alkenyl group-containing straight-chain diorganopolysiloxane having a weight average molecular weight smaller than that of the component (A), and (E) 5-300 ppm of a platinum group metal catalyst as a conversion by weight of platinum group metal to the total amount of the components (A), (B) and (D), provided that the component (D) is previously uniformly mixed with the component (E) and then mixed with the remaining components.

## Description

### BACKGROUND OF THE INVENTION

### TECHNICAL FIELD

This invention relates to a silicone rubber composition for the tire production (hereinafter may be referred to as a rubber composition simply), and more particularly to a silicone rubber composition for the tire production which can be preferably used in the formation of various molds for the tire production, particularly the formation of a plaster mold as a casting core in the method of casting an aluminum alloy mold for tire or in the formation of a bladder for vulcanizing and building the tire and improves a shape stability, strength, elongation and resistance to creep and further resistance to crack growth as well as a method of producing the same.

### RELATED ART

Heretofore, the formation of the mold for tire has been generally carried out as follows. At first, a tread pattern of a tire to be produced is prepared by a wooden pattern (wood resin). Then, a liquid rubber is poured onto the resulting tread pattern in the wood resin and cured by heating to conduct the formation of the tread pattern. Thereafter, a plaster is poured onto the thus formed cured rubber and then cured to obtain a plaster mold transferred with the tread pattern. The thus prepared plaster mold is used to prepare a mold for tire as a final objective.

In the aforementioned production step of the mold for tire, a polysulfide rubber, particularly Thiokol (trade name of the polysulfide rubber, made by Thiokol Corp.) has been widely used as the liquid rubber from old times.

As an improving technique of a rubber composition used in the formation of the mold for tire, for example, JP-A-2004-161882 discloses a rubber composition for the formation of the mold for tire containing a specified organopolysiloxane as a base polymer. Also, JP-A-2004-10691 discloses a heat-conductive silicone rubber shaped body comprising a specified organopolysiloxane and a heat-conductive filler.

However, the polysulfide rubber conventionally used as the liquid rubber generates water and SO₂ gas in the crosslinking reaction, and is unavoidable to take a spongy structure. As a result, such a gas as a compression expanding component is included in the crosslinked product, which attends an irreversible thermal deformation.

Also, the crosslinking reaction does not sufficiently progress under the conventionally used crosslinking conditions and the crosslinked product is at a semi-crosslinked state, so that there is a problem that the change of the shape becomes larger after about 3 days. Further, since the strength of the cured rubber is small and the resistance to creep is poor, the cutout or flatting of the rubber is caused by the insertion of a blade or the like.

Moreover, the conventionally used polysulfide rubber is poor in the wettability with the plaster, so that it is required to conduct a pre-treatment prior to the poring of the plaster. Similarly, when a metal blade for the formation of sipes is inserted into the tread, it is required to previously apply a releasing agent onto the metal blade for enhancing the releasability between the metal blade and the polysulfide rubber. Since the strength of the resulting crosslinked product is not always sufficiently high, there are other problems that fine rib portions are cut out in the mold formation, and the odor of mercaptane is caused in the working, and the substance is an air pollution applied substance, and so on.

On the other hand, according to the technique disclosed in JP-A-2004-161882, it is possible to obtain a rubber composition for the formation of the mold for tire having a dimensional accuracy, shape stability, reinforcing property and workability higher than those of the conventional polysulfide rubber as the liquid rubber and further providing a mirror-finished smooth surface. In this composition, however, the predetermined compounding components are individually mixed with each other, so that the dispersibility in the composition, particularly the dispersibility of a curing catalyst is insufficient and hence a sea-island structure is formed, and as a result there is a problem that the desired properties of the silicone rubber are not sufficiently satisfied.

### SUMMARY OF THE INVENTION

It is, therefore, an object of the invention to provide a silicone rubber composition for the tire production which is superior in the shape stability, strength, elongation and resistance to creep to the conventional polysulfide rubber as a liquid rubber and excellent in the notch property inherent to silicone rubber (resistance to crack growth) and improves the dispersibility of each compounding component to realize more excellent silicone rubber properties.

The inventors have made various studies for solving the above problems and found that the above properties can be improved by using a liquid silicone rubber of an addition reaction crosslinking system as a base polymer and compounding with a plurality of specific compounding components as compared with the conventional polysulfide rubber as a liquid rubber.

Since it is effective to approximate the viscosities of the components to be mixed with each other in order to improve the dispersibility, it is considered that a physical means of previously mixing a curing catalyst with a polymer having a viscosity lower than that of the base polymer is used for supplementing the difference of viscosity between a curing catalyst and the base polymer, whereby the compatibility of the curing catalyst can be enhanced to improve the dispersibility of the composition. Such an adjustment of the viscosity can be attained by adjusting a molecular weight.

On the other hand, it is considered that as the polymer to be mixed with the curing catalyst, a polymer having the same main chain structure as in the base polymer is selected from a viewpoint of the chemical affinity with the base polymer, whereby the dispersibility can be more improved.

From these facts, the inventors have found that the desired properties of silicone rubber can be surely obtained by using the above physical means and chemical means to improve the dispersibility (compatibility) of the curing catalyst, and as a result, the invention has been accomplished.

That is, the silicone rubber composition for the tire production according to the invention comprises (A) 100 parts by weight of a straight-chain diorganopolysiloxane having two or more alkenyl groups bonded to silicon atoms in its molecule, (B) 1-20 parts by weight of an organohydrogenpolysiloxane having two or more hydrogens bonded to silicon atoms in its molecule, (C) 30-60 parts by weight of an inorganic filler, (D) 0.5-20 parts by weight of a straight-chain diorganopolysiloxane having two or more alkenyl groups bonded to silicon atoms in its molecule and a weight average molecular weight smaller than that of the component (A), and (E) 5-300 ppm of a platinum group metal catalyst as a conversion by weight of platinum group metal to the total amount of the components (A), (B) and (D), and is obtained by previously uniformly mixing the components (D) and (E) and then mixing with the remaining components.

In the invention, it is preferable that the component (A) and/or (D) is a diorganopolysiloxane encapsulated at both terminals of its molecular chain with a dimethylvinylsiloxy group. Also, it is preferable that the component (A) has a weight average molecular weight of 10000-20000 and the component (D) has a weight average molecular weight of 5000-16000 and a ratio in weight average molecular weight of the component (D) to the component (A) is 0.5-0.9. Further, it is preferable that the component (B) is an organohydrogenpolysiloxane encapsulated at both terminals of its molecular chain with a trimethylsiloxy group and the component (C) is a fine powder of silica having a specific surface area of not less than 50 m²/g, particularly fumed silica subjected at its surface to a hydrophobic treatment.

Moreover, the term "for the tire production" used herein means both a case that the composition is directly used in the tire production step and a case that the composition is used for manufacturing an installation (apparatus) such as a mold or the like used in the tire production step. Therefore, the silicone rubber composition for the tire production according to the invention can be preferably used in the formation of a mold for tire, particularly the formation of a plaster mold as a casting core in the method of casting an aluminum alloy mold for tire, or in a bladder for the vulcanization of the tire or a bladder for building the tire.

Also, the silicone rubber composition for the tire production according to the invention comprises (A) 100 parts by weight of a dimethyl polysiloxane having a weight average molecular weight of 13000-20000 and encapsulated at both terminals of its molecular chain with a dimethylvinylsiloxy group, (B) 5-20 parts by weight of a methylhydrogenpolysiloxane encapsulated at both terminals of its molecular chain with a trimethylsiloxy group, (C) 30-60 parts by weight of a hydrophobic fumed silica having a specific surface area of 100-400 m²/g, (D) 0.5-20 parts by weight of a dimethylpolysiloxane having a weight average molecular weight of 10000-16000 and a ratio in weight average molecular weight to the component (A) of 0.75-0.85 and encapsulated at both terminals of its molecular chain with a dinethylvinylsiloxy group, and (E) 10-200 ppm of a platinum group metal catalyst as a conversion by weight of platinum group metal to a total amount of the components (A), (B) and (D), which can realize a high-strength rubber structure and can be preferably used in the formation of a plaster mold as a casting core in a method of casting an aluminum alloy mold for tire.

Furthermore, the method of producing a silicone rubber composition for the tire production according to the invention comprises a step of uniformly mixing components (D) and (E) among (A) 100 parts by weight of a straight-chain diorganopolysiloxane having two or more alkenyl groups bonded to silicon atoms in its molecule, (B) 1-20 parts by weight of an organohydrogenpolysiloxane having two or more hydrogens bonded to silicon atoms in its molecule, (C) 30-60 parts by weight of an inorganic filler, (D) 0.5-20 parts by weight of a straight-chain diorganopolysiloxane having two or more alkenyl groups bonded to silicon atoms in its molecule and a weight average molecular weight smaller than that of the component (A), and (E) 5-300 ppm of a platinum group metal catalyst as a conversion by weight of platinum group metal to the total amount of the components (A), (B) and (D), and a step of mixing with the remaining components.

In the rubber composition according to the invention using the components (A)-(D), gas is not generated by adopting liquid silicon rubber of the addition reaction crosslinking system as the components (A) and (B), and hence the deformation of the mold through the temperature can be considerably decreased. Also, the crosslinking start temperature and end time can be optimized by adjusting a chemical activity by the amount of the platinum group metal catalyst (E) added as the curing catalyst, and further the crosslinking rate and hardness of the crosslinked product can be optimized by adjusting the molecular structure and addition amount of the addition reaction crosslinking agent (B). In the latter cases, when the curing catalyst (E) is compounded with the liquid silicone rubbers (A) and (B), such a curing catalyst is previously uniformly mixed with the straight-chain diorganosiloxane as the component (D) having a viscosity (i.e. smaller weight average molecular weight) lower than that of the straight-chain diorganosiloxane of the component (A) (base polymer), whereby the compatibility of the curing catalyst with the base polymer and crosslinking agent and the dispersibility thereof can be improved. Since the polysiloxane is good in the wettability to plaster, there is obtained a plaster mold having a smooth surface. Furthermore, since the silicone rubber is small in the strength, the desired strength and hardness can be obtained by the inorganic filler of the component (C). Particularly, the notch property (resistance to crack growth) inherent to the silicone rubber is largely improved by adding silica subjected at its surface to the hydrophobic treatment as the component (C). Moreover, the curing reaction is promoted by adding the straight-chain diorganopolysiloxane having the viscosity and weight average molecular weight lower than those of the base polymer as the component (D), and hence the desired excellent curing properties can be obtained surely.

Since the rubber composition comprising only the components (A)-(E) is small in the heat conductivity, there may be caused a problem that the crosslinking reaction largely differs between the surface and the interior in accordance with the crosslinking conditions. In this case, such a problem can be solved by adding metal powder as an optional component (F) to adjust the heat conductivity. At the same time, the addition of the metal powder (F) develops an effect of improving the resistance to creep. Furthermore, the heat shrinkage factor of the rubber composition can be adjusted by adding an inorganic powder other than the components (C) and (F) as an optional component (G).

As mentioned above, according to the invention, there can be realized a silicone rubber composition for the tire production being excellent in the shape stability, strength, elongation and resistance to creep as compared with the conventional polysulfide rubber as a liquid rubber but also in the notch property (resistance to crack growth) inherent to silicone rubber and the resistance to deterioration with time and further realizing excellent properties of silicone rubber.

### DETAILED DESCRIPTION OF THE INVENTION

The invention will be described in detail below.
The straight-chain diorganopolysiloxane having two or more alkenyl groups bonded to silicon atoms in its molecule, which is used as a base polymer of the component (A) in the invention, is a well-known organopolysiloxane used as a main starting material (base polymer) in the usual liquid addition-curing type silicone rubber composition.

Such an organopolysiloxane is generally represented by a mean compositional formula of RₐSiO_{(4-a)/2} (wherein R is a substituted or non-substituted monovalent hydrocarbon group having usually a carbon number of 1-10, particularly a carbon number of 1-6, which is bonded to a silicon atom forming a siloxane structure in a molecule, and a is a number of 1.9-2.4, particularly 1.95-2.05), and is fundamentally a straight-chain diorganopolysiloxane containing not less than 2 alkenyl groups bonded to silicon atoms, preferably 2-10 alkenyl groups, more preferably 2-5 alkenyl groups in its molecule, and having a weight average molecular weight as a conversion to polystyrene of, preferably 10000-20000, more preferably about 13000-20000 as measured by GPC (gel permeation chromatography).

In the above compositional formula, R is selected from an alkyl group such as methyl, ethyl, propyl, isopropyl, butyl, tert-butyl, hexyl, cyclohexyl or the like; an alkenyl group such as vinyl, allyl, propenyl, isopropenyl, butenyl or the like; an aryl group such as phenyl, tolyl, xylyl or the like; an aralkyl group such as benzyl, phenylethyl or the like; and halogen-substituted or cyano group-substituted hydrocarbon such as chloromethyl, bromoethyl, 3,3,3-trifluoropropyl, cyanoethyl or the like, in which the substituted or non-substituted monovalent hydrocarbon groups may be same or different. As the alkenyl group is preferable a vinyl group, and as the other hydrocarbon group are preferable methyl group, phenyl group and trifluoropropyl group. Particularly, 95-100 mol% of the substituted or non-substituted hydrocarbon group other than alkenyl group is preferable to be methyl group. The content of alkenyl group is usually 0.0001-20 mol%, preferably 0.001-10 mol%, more preferably 0.01-5 mol% in the total organic group R (i.e. substituted or non-substituted monovalent hydrocarbon group). Moreover, the two or more alkenyl groups included in one molecule may be bonded to silicon atoms in both ends of the molecular chain or silicon atoms in the middle of the molecular chain or to both of the silicon atoms, but it is preferable that the alkenyl groups are bonded at least to silicon atoms in the both ends of the molecular chain from a viewpoint of the properties of the cured silicone rubber and the like.

The organopolysiloxane is a straight-chain diorganopolysiloxane
in which a main chain is comprised of repetitive diorganosiloxane units (R₂SiO_{2/2} unit). A part of the main chain may take a branched structure having a certain RSiO_{3/2} unit and/or SiO_{4/2} unit. Usually, it is preferable to be a straight-chain diorganopolysiloxane having only the repetitive diorganosiloxane units (R₂SiO_{2/2} unit) as a main chain and encapsulated at both ends of the molecular chain with triorganosiloxy group (R₃SiO_{1/2} unit), which includes, for example, dimethylpolysiloxane encapsulated at both ends of the molecular chain with dimethylvinylsiloxy group, dimethylsiloxane-methylvinylsiloxane copolymer encapsulated at both ends of the molecular chain with dimethylvinylsiloxy group, dimethylsiloxane-diphenylsiloxane copolymer encapsulated at both ends of the molecular chain with dimethylvinylsiloxy group, dimethylsiloxane-methylvinylsiloxane copolymer encapsulated at both ends of the molecular chain with trimethylsiloxy group and the like.
The alkenyl group-containing organopolysiloxane as the component (A) is a single polymer having the above molecular structure, or a mixture of these polymers. The alkenyl group-containing organopolysiloxanes may be used alone or in a combination of tow or more as the component (A). When two or more alkenyl group-containing organopolysiloxanes having different weight average molecular weights are used together as the component (A), it is preferable that the value of the weight average molecular weight as the resulting mixture is within the above defined range.

A preferable example of the component (A) is as follows. 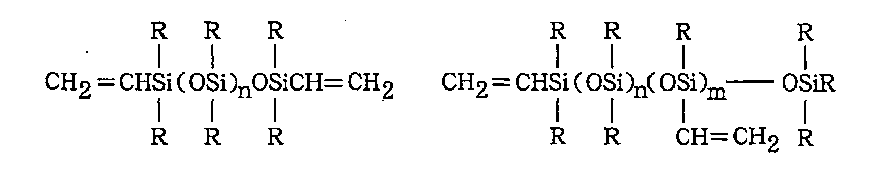 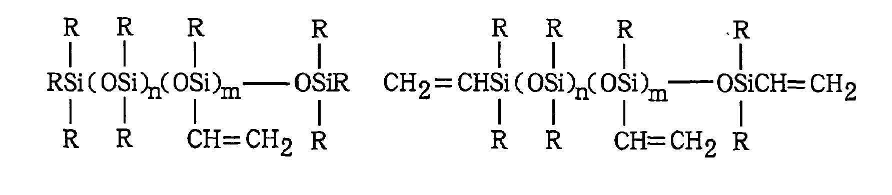 In this case, R is the same as the aforementioned substituted or non-substituted monovalent hydrocarbon group, and each of m and n is a positive integer giving the predetermined weight average molecular weight on the individual single molecule, or a positive integer giving the predetermined weight average molecular weight as an average value on a uniform component of a mixture having a polymerization degree distribution.

In the invention, the organohydrogenpolysiloxane used as the component (B) acts as a crosslinking agent in the hydrosilylation addition reaction with the component (A). This organohydrogenpolysiloxane is represented by a mean compositional formula of R'_{c}H_{d}SiO_{(4-c-d)/2} (wherein R' is a substituted or non-substituted monovalent hydrocarbon group other than an aliphatic unsaturated group, and c is 0.8-2, d is 0.01-1 and c+d is 0.81-3). It has a viscosity at 25°C of 0.5-1000 cP, particularly about 1-500 cP, and the number of silicon stoms in one molecule (or polymerization degree) of 2-300, particularly about 3-200. The molecular structure is not particularly limited, but is possible to use various structures such as a straight -chain structure, a cyclic structure, a branched structure, a three-dimensional network (resin-shaped) structure and the like likewise the structure usually used in the conventional liquid addition curing type silicone rubber composition. It is required to contain at least two hydrogens (usually about 2-200), preferably 3 or more hydrogens (e.g. about 3-100) bonded to silicon atoms (i.e. SiH group) in one molecule. Also, the monovalent organic group bonded to silicon atom other than hydrogen atom (e.g. R' group in the above mean compositional formula) includes the same as mentioned in the substituted or non-substituted monovalent hydrocarbon groups in the organopolysiloxane of the component (A), but substituted or non-substituted monovalent hydrocarbon group other than the aliphatic unsaturated group such as alkenyl group is preferable, and particularly methyl group, phenyl group and 3,3,3,-trifluoropropyl group are preferable.

As the organohydrogenpolysiloxane are mentioned 1,1,3,3-tetramethyl disiloxane, 1,3,5,7-tetramethylcyclo tetrasiloxane, tris(dimethylhydrogensiloxy) methylsilane, tris(dimethylhydrogensiloxy) phenylsilane, methylhydrogen polysiloxane encapsulated at both ends of the molecular chain with trimethylsiloxy group, dimethylsiloxane-methylhydrogensiloxane copolymer encapsulated at both ends of the molecular chain with trimethylsiloxy group, dimethylpolysiloxane encapsulated at both ends of the molecular chain with dimethylhydrogensiloxy group, dimethylsiloxane-methylhydrogensiloxane copolymer encapsulated at both ends of the molecular chain with dimethylhydrogensiloxy group, methylhydrogensiloxane-diphenylsiloxane copolymer encapsulated at both ends of the molecular chain with trimethylsiloxy group, methylhydrogensiloxane-diphenylsiloxane-dimethylsiloxane copolymer encapsulated at both ends of the molecular chain with trimethylsiloxy group, a copolymer consisting of (CH₃)₂HSiO_{1/2} unit and SiO_{4/2} unit, a copolymer consisting of (CH₃)₂HSiO_{1/2} unit, SiO_{4/2} unit and (C₆H₅)₁SiO_{1/2} unit, and the like. Particularly, organohydrogenpolysiloxanes encapsulated at both ends with triorganosiloxy group such as methylhydrogen polysiloxane encapsulated at both ends with trimethylsiloxy group and the like are preferable.

The amount of the component (B) added is 1-20 parts by weight, particularly 5-20 parts by weight per 100 parts by weight of the component (A). When the addition amount is too small, the crosslinking density becomes too low and hence the heat resistance of the cured silicone rubber is badly affected, and also the strength is low and may not be withstood to the flowing of plaster in the formation of the plaster mold. While, when it is too large, the surface becomes not mirror-shaped or the heat resistance is badly affected. Also, the component (B) may be compounded so that hydrogen atom bonded to silicon atom in this component is 0.5-10 mol, preferably 1-5 mol per 1 mol of the alkenyl groups bonded to silicon atoms in the total amount of the component (A) and the component (D) mentioned later. The organohydrogenpolysiloxanes as the component (B) may be used alone or in a combination of two or more.

As the inorganic filler used as the component (C) in the invention may be used everything conventionally known as a reinforcing filler for silicone rubber. Particularly, silica fine powder having a specific surface area of not less than 50 m²/g, preferably 100-400 m²/g as measured by BET adsorption method is preferable. As the silica fine powder are mentioned fumed silica (dry silica), precipitated silica (wet silica) and the like. Among them, the fumed silica (dry silica) is preferable. Also, it is possible to use a hydrophobic silica covered with an organic group such as an alkyl group or the like by subjecting a great number of silanol groups existing on the surface of the silica fine powder to a hydrophobic treatment with an organopolysiloxane, an organopolysilazane, chlorosilane, an alkoxysilane or the like to form an ether bond on the surface of the silica fine powder. The hydrophobic treatment may be carried out by previously mixing with the above treating agent under heating prior to the compounding of the untreated component (C) with one or more other components of the composition, or may be carried out together with the preparation of the composition by mixing the untreated component (C) with the other components and the above treating agent. The inorganic fillers may be used alone or in a combination of two or more. As the hydrophobic silica may be concretely mentioned Aerosil R-812, R-812S, R-972, R-974 (made by Degussa), Rheorosil MT-10 (made by Tokuyama Soda Co., Ltd.), Nipsil SS series (made by Nippon Silica Co., Ltd.) and the like.

The amount of the component (C) added is 30-60 parts by weight per 100 parts by weight of the component (A). When the addition amount is too small, the sufficient strength and hardness are not obtained and also the effect of improving the resistance to creep is insufficient, while when it is too large, the viscosity of the rubber composition becomes too high and it is difficult to conduct the pouring.

The alkenyl group-containing straight-chain diorganopolysiloxane used as the component (D) in the invention is compounded for improving the compatibility and dispersibility of a platinum group metal catalyst mentioned later as a component (E) to the base polymer and the crosslinking agent. For this end, it is essential to previously contact and uniformly mix the component (D) with the platinum group metal catalyst of the component (E) to form a mixture and then compound with the other components. In this point, it is essentially distinguished over the alkenyl group-containing straight-chain diorganopolysiloxane of the component (A). If the component (D) is not previously mixed with the component (E) in the preparation of the composition, the effect of improving the dispersibility as an object of the invention is not achieved.

Also, the alkenyl group-containing straight-chain diorganopolysiloxane of the component (D) is required to have a weight average molecular weight smaller than that of the alkenyl group-containing straight-chain diorganopolysiloxane as the base polymer of the component (A) (i.e. the viscosity is lower than that of the base polymer) for enhancing the dispersibility of the platinum group metal catalyst as the component (E)). Preferably, the ratio in the weight average molecular weight of the component (D) to the component (A) is 0.5-0.9, more preferably 0.75-0.85. More concretely, it is preferable to use the component (D) having a weight average molecular weight of 5000-16000, more preferably 10000-13000 as a conversion to polystyrene through GPC (gel permeation chromatography) analysis in which the ratio in the weight average molecular weight of the component (D) to the component (A) is within the above range.

On the other hand, the alkenyl group-containing straight-chain diorganopolysiloxane of the component (D) is preferable to have the same molecular structure as in the base polymer of the component (A) from a viewpoint of the chemical affinity with the base polymer of the component (A). As the component (D), therefore, there can be adopted the same molecular structure as in the straight-chain diorganopolysiloxane containing alkenyl groups bonded to two or more silicon atoms as the component (A) except the compounding manner to the composition and the weight average molecular weight. Concretely, a straight-chain diorganopolysiloxane comprising only the repetitive diorganosiloxane units as the main chain and encapsulated at both ends of the molecular chain with triorganosiloxy group is preferable. For example, there are mentioned dimethylpolysiloxane encapsulated at both ends of the molecular chain with dimethylvinylsiloxy group, dimethylsiloxane-methylvinylsiloxane copolymer encapsulated at both ends of the molecular chain with dimethylvinylsiloxy group, dimethylsiloxane-diphenylsiloxane copolymer encapsulated at both ends of the molecular chain with dimethylvinylsiloxy group, dimethylsiloxane-methylvinylsiloxane copolymer encapsulated at both ends of the molecular chain with trimethylsiloxy group and the like. The alkenyl group-containing organopolysiloxane of the component (D) is a single polymer having the above molecular structure or a mixture of these polymers. As the component (D), these alkenyl group-containing organopolysiloxanes may be used alone or in a combination of two or more. Moreover, when using two or more alkenyl group-containing organopolysiloxanes having different weight average molecular weights as the component (D), it is preferable that the value of the weight average molecular weight as a whole of the mixture is within the above range and the ratio in the weight average molecular weight of the component (D) as a whole of the mixture to the component (A) is within the above range.

The amount of the straight-chain diorganopolysiloxane added as the component (D) is 0.5-20 parts by weight, preferably 0.5-10 parts by weight, more preferably 0.5-5 parts by weight per 100 parts by weight of the component (A). When the addition amount is too large or too small, it is difficult to sufficiently obtain satisfactory properties of the cured product.

The platinum group metal catalyst used as the component (E) in the invention is a catalyst for promoting hydrosilylation addition reaction between alkenyl groups in the components (A) and (D) and SiH group in the component (B). As previously mentioned, it is essential to previously contact and uniformly mix with the alkenyl group-containing straight-chain diorganopolysiloxane of the component (D), which is then compounded with the other components.

As the platinum group metal catalyst, mention may be made of platinum black; chloroplatinic acid; a modified product of chloroplatinic acid with an alcohol; a platinum compound such as a complex of chloroplatinic acid with an olefin, an aldehyde, a vinylsiloxane or an acetylene alcohol, or the like; a compound containing a platinum group metal such as rhodium, palladium or the like; and so on. Particularly, a modified product with silane or siloxane such as a complex of chloroplatinic acid with vinylsiloxane or the like is preferable from a viewpoint of the compatibility with the components (A), (B) and (D). In the latter case, vinylsiloxane as a ligand forming the complex with the platinum group metal is a constitutional element of the platinum group metal catalyst, which is not correspond to either component (A) or (D). The amount of the platinum group metal catalyst compounded is 5-300 ppm, preferably 10-200 ppm as a conversion be weight of the platinum group metal per the total weight of the components (A), (B) and (D). When the addition amount is too small, the crosslinking start temperature becomes too high to bring about the delay of the end time, while when it is too large, there is a fear that the crosslinking starts prior to the completion of the pouring.

In the invention, metal powder optionally used, if necessary, as the component (F) is not particularly limited as far as it can enhance the heat conductivity in the rubber composition, and pure metal powder of aluminum, gold, silver, copper or the like can be used preferably. The metal powder is spheres having a particle size of 10-500 µm, preferably about 100-200 µm. When the metal powder is needle-shaped or plate-shaped, undesirable anisotropy appears in the properties of the resulting crosslinked product. The amount of the metal powder added as the component (F) is usually not more than 10 parts by weight (i.e. 0-10 parts by weight), preferably 0.5-10 parts by weight, more preferably 0.5-5 parts by weight per 100 parts by weight of the component (A). When the addition amount is too small, the heat conductivity in the rubber composition can not be sufficiently increased and hence the progress of the crosslinking reaction may differ between the surface and the interior. While, when it is too large, the viscosity of the rubber composition becomes too high and it may be difficult to fill the rubber composition into minutiae. Further, the pouring time is prolonged to deteriorate the workability and the wettability to the wood resin may lower.

The inorganic powder optionally used, if necessary, as the component (G) in the invention powder other than the above inorganic filler of the component (C) and the metal powder of the component (F) and has an action of adjusting the heat shrinkage factor of the rubber composition. The kind of the inorganic powder is not particularly limited and can include, for example, a mineral powder such as mica, talc, gypsum, calcite, fluorite, phosphorite, feldspar or the like; a clay such as kaolin or the like; zeolite, glass powder and so on. The amount of the inorganic powder added as the component (G) is usually not more than 5 parts by weight (i.e. 0-5 parts by weight), preferably 1-5 parts by weight, more preferably 1-2 parts by weight per 100 parts by weight of the component (A). When the addition amount is too small, the adjusting effect on the rubber composition may become insufficient, while when it is too large, the viscosity of the rubber composition becomes too high and the desired effect may not be developed.

The rubber composition according to the invention may be properly added with various additives used in the conventional silicone rubber composition, if necessary. For example, a control material for the adjustment of the curing time, which prolongs the usable life at room temperature or the like, a silane coupling agent and so on may be added, if necessary.

The crosslinking reaction of the rubber composition according to the invention may be preferably carried out at a temperature of 20-70°C, preferably 20-60°C, more preferably 30-50°C for a time of 4-24 hours, preferably 6-18 hours.

The rubber composition of the invention can be preferably used in the formation of the mold for tire because it has excellent rubber properties as mentioned above. Also, since the bending performance is excellent, the above rubber composition is preferably applied to bladders for tire building and vulcanization. In the latter case, there are merits that the peeling from the inner surface of the vulcanized tire is good and the resistance to deterioration with the lapse of time is high because the slippage effect is high.

When the rubber composition according to the invention is produced by mixing the components (A)-(E) and one or more optional components by a well-known mixing means such as a planetary mixer, a Shinagawa mixer or the like, the components (D) and (E) are previously uniformly mixed to form a mixture, and then the resulting mixture is arbitrarily mixed with the remaining components (A), (B) and (C) and the optional component(s) or a mixture thereof.

The following examples are given in the illustration of the invention and are not intended as limitations thereof. In the examples and comparative examples, "part" means part by weight and the viscosity is a value at 25°C.

<Preparation Example 1> Preparation of compound
In a kneader are mixed 100 parts of straight-chain dimethylpolysiloxane encapsulated at both ends of its molecular chain with dimethylvinylsiloxy group and comprising repetitive dimethylsiloxane units as a main chain and having a weight average molecular weight of 16000 (vinyl group content = 0.2 wt%), 40 parts of fumed silica (specific surface area through BET method: 200 m²/g, tap density: 0.2 g/ml), 5 parts of hexamethyl disilazane and 2.5 parts of water at room temperature for 1 hour. Then, the temperature inside the kneader is raised up to 160°C over 1 hour and then the mixing is continued for 4 hours while keeping this temperature to obtain a compound (1).

<Preparation Example 2> Preparation of crosslinking agent
A crosslinking agent (1) is obtained by mixing 7 parts of the same dimethylpolysiloxane encapsulated at both ends of its molecular chain with dimethylvinylsiloxy group having the weight average molecular weight of 16000 as in Preparation Example 1 (vinyl group content = 0.2 wt%) with 3 parts of methylhydrogen polysiloxane encapsulated at both ends of its molecular chain with trimethylsiloxy group having a viscosity of 30 cP (content of hydrogen atom as Si-H bond = 1.5 wt%).

<Preparation Example 3> Preparation of curing catalyst
A curing catalyst (1) is prepared by uniformly mixing 3 parts of a catalyst finely pulverized by dispersing a vinylsiloxane complex of chloroplatinic acid into a thermoplastic silicone resin having a softening point of 80-90°C (corresponding to 30 ppm as a conversion by weight of platinum metal to total amount of components (A), (B) and (D) in the compounding composition of each of the examples and comparative examples) with 7 parts of dimethylpolysiloxane encapsulated at both ends of its molecular chain with dimethylvinylsiloxy group and having a weight average molecular weight of 13000 (vinyl group content = 0.21 wt%).

<Example 1>
The compound (1) and the crosslinking agent (1) are mixed at a mixing ratio of 100:10 (weight ratio), which is mixed with 1 parts of the curing catalyst (1) to prepare a rubber composition. Then, the rubber composition is supplied to a wood resin provided with metal blades having a tread pattern for tire and cured under conditions of 40°C x 16 hours.

<Conventional Example>
As a conventional example, the conventionally used Thiokol (trade name of a polysulfide rubber, made by Thiokol Corp.) is cured under the same crosslinking conditions as in Example 1.

<Comparative Example 1>
A rubber composition is prepared in the same manner as in Example 1 except that 0.3 part of the catalyst finely pulverized by dispersing vinylsiloxane complex of chloroplatinic acid into the thermoplastic silicone resin having a softening point of 80-90°C used in Preparation Example 3 is used instead of 1 part of the curing catalyst (1). Then, this rubber composition is supplied to a wood resin provided with metal blades having a tread pattern for tire and cured under conditions of 40°C x 16 hours.

<Comparative Example 2>
A rubber composition is prepared in the same manner as in Example 1 except that 0.3 part of the catalyst finely pulverized by dispersing vinylsiloxane complex of chloroplatinic acid into the thermoplastic silicone resin having a softening point of 80-90°C used in Preparation Example 3 and 0.7 part of dimethylpolysiloxane encapsulated at both ends of its molecular chain with dimethylvinylsiloxy group and having a weight average molecular weight of 13000 (vinyl group content = 0.21 wt%) used in Preparation Example 3 are individually added and mixed with a mixture of 100:10 (weight ratio) of the compound (1) and the crosslinking agent (1) without previously mixing. Then the rubber composition is supplied to a wood resin provided with metal blades having a tread pattern for tire and cured under conditions of 40°C x 16 hours.

<Example 2>
A rubber composition is prepared in the same manner as in Example 1 except that a curing catalyst (2) is prepared in the same manner as in Preparation Example 3 by using 7 parts of dimethylpolysiloxane encapsulated at both ends of its molecular chain with dimethylvinylsiloxy group and having a weight average molecular weight of 5000 (vinyl group content = 0.56 wt%) instead of 7 parts of dimethylpolysiloxane encapsulated at both ends of its molecular chain with dimethylvinylsiloxy group and having a weight average molecular weight of 13000 (vinyl group content = 0.21 wt%) and used instead of the curing catalyst (1). Then, the rubber composition is supplied to a wood resin provided with metal blades having a tread pattern for tire and cured under conditions of 40°C x 16 hours.

With respect to the cured products obtained in the examples and comparative examples, the shape stability, strength, workability, safeness and bladder life are evaluated. The evaluation results are shown in Table 1. Moreover, each of the properties of the cured rubber is measured according to JIS K6301. As to the resistance to notched crack growth, the number of strains N repeatedly applied until crack grows to 1.0 mm is measured under conditions that an initial strain is 100%, a load strain is 30% (load strain: 70-130%), a load frequency is 10 Hz, and an atmosphere temperature is 25°C±2°C. As to the bladder life, the vulcanization number (times) till the puncture of the bladder is measured under a condition that a tire vulcanization time is 15 minutes (press fitting time at a steam pressure of 13 kg/cm² is 5 minutes, and keeping time under an internal pressure of 21 kg/cm² is 10 minutes).

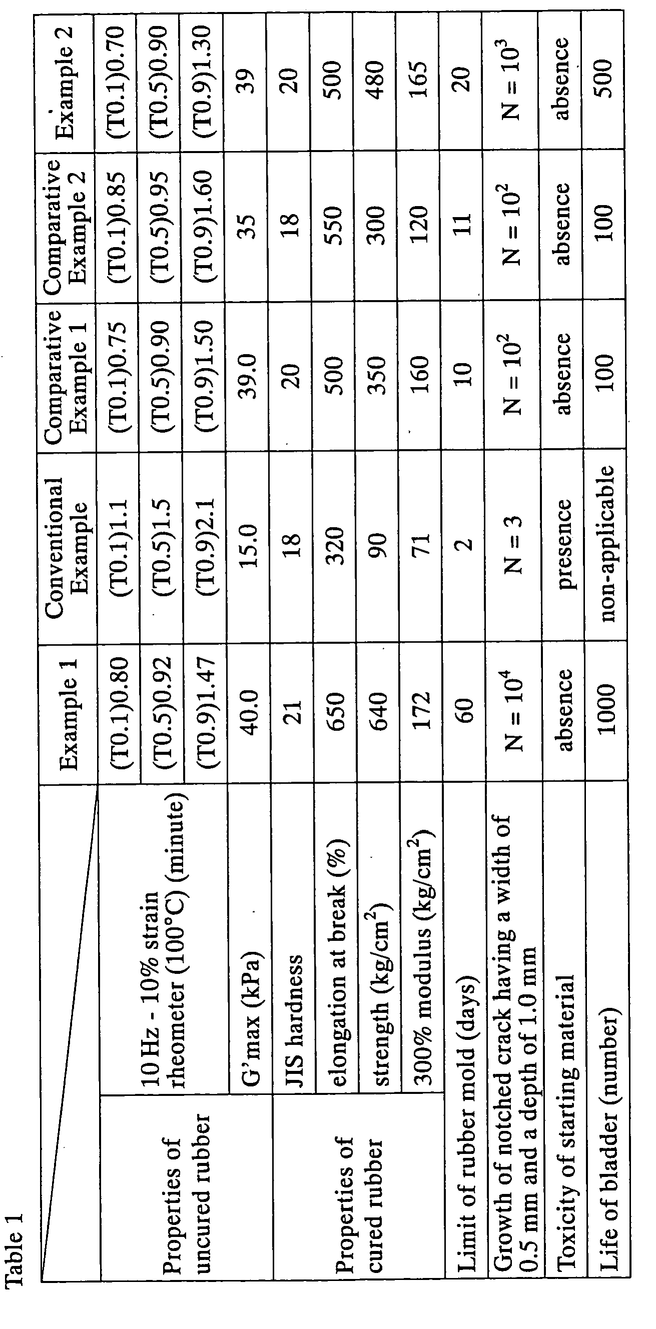

As seen from the results of Table 1, the shape stability in the examples is high as compared with the conventional example and comparative examples, and the day limit of not less than 40 days can be ensured. Also, since the strength and the resistance to creep are high, the cutout or flatting of the rubber is hardly caused by the insertion of a blade or the like. Particularly, the easiness of the cutout inherent to silicone rubber is well conquered.

## Claims

1. A silicone rubber composition for the tire production comprising (A) 100 parts by weight of a straight-chain diorganopolysiloxane having two or more alkenyl groups bonded to silicon atoms in its molecule, (B) 1-20 parts by weight of an organohydrogenpolysiloxane having two or more hydrogens bonded to silicon atoms in its molecule, (C) 30-60 parts by weight of an inorganic filler, (D) 0.5-20 parts by weight of a straight-chain diorganopolysiloxane having two or more alkenyl groups bonded to silicon atoms in its molecule and a weight average molecular weight smaller than that of the component (A), and (E) 5-300 ppm of a platinum group metal catalyst as a conversion by weight of platinum group metal to the total amount of the components (A), (B) and (D), provided that the component (D) is previously uniformly mixed with the component (E) and then mixed with the remaining components.

2. A silicone rubber composition according to claim 1, wherein the component (A) and/or (D) is a diorganopolysiloxane encapsulated at both terminals of its molecular chain with a dimethylvinylsiloxy group.

3. A silicone rubber composition according to claim 1 or 2, wherein the component (A) has a weight average molecular weight of 10000-20000 and the component (D) has a weight average molecular weight of 5000-16000 and a ratio in weight average molecular weight of the component (D) to the component (A) is 0.5-0.9.

4. A silicone rubber composition according to claim 1, wherein the component (B) is an organohydrogenplysiloxane encapsulated at both terminals of its molecular chain with a trimethylsiloxy group.

5. A silicone rubber composition according to claim 1, wherein the component (C) is silica fine powder having a specific surface area of not less than 50 m²/g.

6. A silicone rubber composition according to claim 5, wherein the component (C) is a fumed silica subjected at its surface to a hydrophobic treatment.

7. A silicone rubber composition according to any one of claims 1 to 6, which is used in the formation of a mold for tire.

8. A silicone rubber composition according to claim 7, which is used in the formation of a plaster mold as a casting core in a method of casting an aluminum alloy mold for tire.

9. A silicone rubber composition according to any one of claims 1 to 6, which is used in a bladder for the vulcanization of a tire.

10. A silicone rubber composition according to any one of claims 1 to 6, which is used in a bladder for tire building.

11. A silicone rubber composition according to claim 1, which comprises (A) 100 parts by weight of a dimethyl polysiloxane having a weight average molecular weight of 13000-20000 and encapsulated at both terminals of its molecular chain with a dimethylvinylsiloxy group, (B) 5-20 parts by weight of a methylhydrogenpolysiloxane encapsulated at both terminals of its molecular chain with a trimethylsiloxy group, (C) 30-60 parts by weight of a hydrophobic fumed silica having a specific surface area of 100-400 m²/g, (D) 0.5-20 parts by weight of a dimethylpolysiloxane having a weight average molecular weight of 10000-16000 and a ratio in weight average molecular weight to the component (A) of 0.75-0.85 and encapsulated at both terminals of its molecular chain with a dinethylvinylsiloxy group, and (E) 10-200 ppm of a platinum group metal catalyst as a conversion by weight of platinum group metal to a total amount of the components (A), (B) and (D) and is used in the formation of a plaster mold as a casting core in a method of casting an aluminum alloy mold for tire.

12. A method of producing a silicone rubber composition for the tire production comprising a step of uniformly mixing components (D) and (E) among (A) 100 parts by weight of a straight-chain diorganopolysiloxane having two or more alkenyl groups bonded to silicon atoms in its molecule, (B) 1-20 parts by weight of an organohydrogenpolysiloxane having two or more hydrogens bonded to silicon atoms in its molecule, (C) 30-60 parts by weight of an inorganic filler, (D) 0.5-20 parts by weight of a straight-chain diorganopolysiloxane having two or more alkenyl groups bonded to silicon atoms in its molecule and a weight average molecular weight smaller than that of the component (A), and (E) 5-300 ppm of a platinum group metal catalyst as a conversion by weight of platinum group metal to the total amount of the components (A), (B) and (D), and a step of mixing with the remaining components.
